# EUROPÄISCHE PATENTSCHRIFT

(11) **EP 2 977 358 B1**
(45) Veröffentlichungstag und Bekanntmachung des Hinweises auf die Patenterteilung: **04.09.2019**
(21) Anmeldenummer: 15176692.0
(22) Anmeldetag: 14.07.2015
(51) Int. Cl.: C03B 29/06, C03C 23/00, C03B 23/047, C03B 23/07, A61J 1/05, A61J 1/14, C03B 23/11, C03B 29/02, C03B 35/06, C03B 21/06, C03B 25/02, C03B 32/00

(54) **VERFAHREN ZUM THERMISCHEN BEHANDELN EINES RINGFÖRMIGEN BEREICHS EINER INNEREN OBERFLÄCHE EINES AUS EINEM BOROSILIKAT-ROHRGLAS HERGESTELLTEN GLASBEHÄLTERS**
METHOD FOR THERMALLY TREATING AN ANNULAR AREA OF AN INTERNAL SURFACE OF A GLASS CONTAINER PRODUCED FROM A BOROSILICATE GLASS
PROCEDE DE TRAITEMENT THERMIQUE D'UNE ZONE ANNULAIRE D'UNE SURFACE INTERIEURE D'UN RECIPIENT EN VERRE POUR TUBES FABRIQUE A PARTIR D'UN VERRE TUBULAIRE DE BOROSILICATE

(30) Priorität: 18.07.2014 DE 102014214083
(43) Veröffentlichungstag der Anmeldung: 27.01.2016
(73) Patentinhaber: Schott AG, 55122 Mainz (DE)
(72) Erfinder: FROST, Dr. Robert, 9034 Eggersriet (CH); HASELHORST, Georg, 61389 Schmitten (DE)
(74) Vertreter: Herzog IP Patentanwalts GmbH

(56) Entgegenhaltungen:
- DE-C1- 19 812 056
- US-A- 2 199 332
- US-A- 4 731 254
- US-A1- 2004 129 026
- US-A1- 2010 255 229
- US-A1- 2013 283 860
- "Erlenmeyer flask", Wikipedia , 16. Juni 2014 (2014-06-16), XP055234912, Gefunden im Internet: URL:https://en.wikipedia.org/wiki/Erlenmey er_flask?oldid=613122418 [gefunden am 2015-12-09]

## Beschreibung

Die vorliegende Erfindung betrifft ein Verfahren zum thermischen Behandeln eines ringförmigen Bereichs einer inneren Oberfläche eines aus einem Borosilikat-Rohrglas hergestellten Glasbehälters, wobei sich der ringförmige Bereich auf einem rohrförmigen Abschnitt des Glasbehälters befindet und sich einem Glasbehälterboden anschließt. Ferner betrifft die Erfindung eine Glasbearbeitungsvorrichtung und eine Bodenmaschine hierfür zum Herstellen von Glasbehältern aus einem Borosilikat-Rohrglas.

Die gattungsgemäßen Glasbehälter weisen einen zylindrischen, rohrförmigen Abschnitt oder konischen Abschnitt auf. Insbesondere werden die Glasbehälter als Spritzen und Fläschchen gefertigt und hauptsächlich zur Lagerung und Verabreichung von pharmazeutischen Produkten wie Medikamenten verwendet.

Ausgangsprodukt des gattungsgemäßen Glasbehälters ist ein Rohrglas. Die zur Herstellung des Glasbehälters verwendeten Glasbearbeitungsvorrichtungen weisen eine Muttermaschine und eine Bodenmaschine auf, die beide drehbar sind und eine Anzahl von Halteeinheiten aufweisen, die beispielsweise ein Einspannfutter umfassen. Üblicherweise ist die Bodenmaschine unterhalb der Muttermaschine angeordnet. In das Einspannfutter der Muttermaschine wird ein Rohrglas von ca. 1,5 m Länge eingespannt, wobei das Rohrglas um eine bestimmte Länge nach unten über das Einspannfutter übersteht. Am nach unten überstehenden offenen Ende wird das Rohrglas bestimmten Bearbeitungsvorgängen unterzogen, die an unterschiedlichen Bearbeitungsstationen durchgeführt werden. Hierzu werden die Muttermaschine und mit ihr die Einspannfutter um einen bestimmten Winkel von einer Bearbeitungsstation zur nächsten gedreht. Ist das nach unten überstehende Ende des Rohrglases fertig bearbeitet, so dass es beispielsweise einen Rollrand oder ein Gewinde aufweist, so muss ein Teil des Rohrglases abgetrennt werden. In der Bearbeitungsstation, in welcher der Trennschritt vorgenommen wird, wird das betreffende Einspannfutter der Muttermaschine axial fluchtend mit einem Einspannfutter einer Halteeinheit der Bodenmaschine angeordnet. Die Halteeinheit der Bodenmaschine ist axial bewegbar und ergreift das Rohrglas etwas oberhalb des nach unten überstehenden Endes des Rohrglases. Im Bereich zwischen dem Einspannfutter der Muttermaschine und dem Einspannfutter der Bodenmaschine wird üblicherweise eine Flamme, die von einem Gasbrenner einer Trenneinrichtung bereitgestellt wird, zum Erhitzen auf das Rohrglas gerichtet, wobei das Rohrglas auch auf andere Weisen erhitzt werden kann. Dabei ist der Gasbrenner der Trenneinrichtung in den meisten Fällen in seiner Position festgelegt. Um eine möglichst rotationssymmetrische Erwärmung über den Umfang des Rohrglases zu erreichen, sind die Halteeinheiten um die eigene Achse drehbar. Das Rohrglas wird solange erhitzt, bis dass es so dünnflüssig ist, dass der Teil, der im Einspannfutter der Bodenmaschine eingespannt ist, durch Herunterfahren des Einspannfutters der Bodenmaschine vom übrigen Teil des Rohrglases getrennt werden kann. Dabei verjüngt sich der erwärmte Teil des Rohrglases und schnürt sich soweit ein, dass an der Trennstelle jeweils ein geschlossener Glasbehälterboden entsteht, einer am abgezogenen Teil, der sich im Einspannfutter der Bodenmaschine befindet und einer am im Einspannfutter der Muttermaschine verbliebenen Teils des Rohrglases.

Im Folgenden wird der Teil des Rohrglases betrachtet, der sich nach der Trennung im Einspannfutter der Bodenmaschine befindet. Wie bereits ausgeführt, ist das freie offene Ende bereits fertig bearbeitet, allerdings ist der Glasbehälterboden des nun entstandenen Glasbehälters noch nicht in der gewünschten Form. Der Glasbehälterboden befindet sich in diesem Bearbeitungszustand bezogen auf die Wirkrichtung der Schwerkraft oberhalb des offenen Endes, was folgende Dinge mit sich zieht: Wie oben beschrieben, ist der Glasbehälterboden durch einen thermischen Trennschritt erzeugt worden, so dass die Viskosität des Glases im Bodenbereich noch so gering ist, dass der Glasbehälterboden je nach Durchmesser des verwendeten Rohrglases mehr oder weniger stark nach unten durchhängt. Zudem weist der Glasbehälterboden eine sich radial ändernde Wandstärke auf. Um den Glasbehälterboden des Glasbehälters mit den gewünschten Eigenschaften ausstatten zu können, muss er noch weiteren, hauptsächlich thermischen Bearbeitungsschritten unterzogen werden. Um dem Durchhängen des Bodens entgegenzuwirken, wird über das offene Ende des Glasbehälters ein Gas, üblicherweise Luft, in den Glasbehälter eingeblasen, wodurch ein Staudruck entsteht, der den Glasbehälterboden stützt.

Mit dem Einblasen eines Gasstroms hat noch einen weiterer Aspekt verbunden. Für die Lagerung von pharmazeutischen Produkten werden bevorzugt Borosilikatgläser verwendet, da sie eine hohe hydrolytische Beständigkeit bei vergleichsweise geringen Kosten bieten. Zum Senken des Schmelzpunktes enthalten Borosilkatgläser auch Natrium. Na-Ionen sind aber im Glas nicht valent gebunden, sondern vagabundieren durch die Glasmatrix, die hauptsächlich vom SiO₂ bestimmt wird. Wird das Rohrglas zum Trennen erhitzt, sind Temperaturen von über 1200°C notwendig, was deutlichüber der Verdampfungstemperatur von Natrium liegt. Folglich verdampfen große Mengen von Na vom Glasbehälterboden weg und setzen sich an verschiedenen Stellen im Glasbehälter wieder ab. Das Ausdampfen von Natrium hat auch den Effekt, dass Bor in Form von Boraten mitgeschleppt wird und auch ausdampft, auch wenn die Borate im Vergleich zu Natrium deutlich fester in der Glasmatrix eingebunden sind.

Der Glasbehälter wird am Glasbehälterboden sehr stark thermisch behandelt, während am zylindrischen Abschnitt beim gattungsgemäßen Verfahren keine Wärmebehandlung stattfindet. Infolgedessen entstehen im Glasbehälter starke Thermospannungen, die dazu führen, dass der Glasbehälter nach dem Abkühlen zerspringen kann. Um dies zu verhindern, ist es in vielen Fällen empfehlenswert, eine weitere thermische Behandlung vorzunehmen, um die Spannungen abzubauen. Diese thermische Behandlung wird auch als Entspannung bezeichnet und findet in einem Entspannungsofen bei einer Entspannungstemperatur statt, bei der sich das Glas oberhalb des oberen Entspannungspunktes befindet. Am oberen Entspannungspunkt weist das Glas eine Viskosität von 10^{13,3} dPa sec auf. Bei den hier relevanten Borosilikat-Rohrgläsern wird der obere Entspannungspunkt bei etwa 550 bis 600°C erreicht, also deutlich unterhalb der Temperaturen, die für das Trennen des Glasbehälters vom Rohrglas notwendig sind. Hierbei verdampft ein Großteil des Natriumborats. Die nicht verdampften Teile brennen sich in die Wandung des Glasbehälters ein. Problematisch hieran ist, dass Na-Ionen in die Substanz, die in den Glasbehältern gelagert wird, migrieren kann. Insbesondere bei pharmazeutischen Substanzen ist dies nicht erwünscht. Die Migrationsneigung hängt stark davon der in den Glasbehältern gelagerten Substanzen und deren pH-Wert ab.

Durch ein Einleiten des Gasstroms in den Glasbehälter bzw. in das Rohrglas wird auch ein Teil des Natriums während des Trennprozesses aus dem Glasbehälter entfernt, so dass sich weniger Natrium in die Wandung einbrennen kann. Der Gasstrom muss nur sicherstellen, dass das Natrium auch aus dem Glasbehälter entfernt und nicht nur dort herumgewirbelt wird. Weitere Anforderungen an die Eigenschaften des Gasstroms müssen nicht erfüllt werden. Die Neigung, dass Natrium in die in den Glasbehältern gelagerten Substanzen migrieren kann, wird in diesem Zusammenhang auch als Oberflächenalkalinität bezeichnet.

In der EP 2 546 206 A1 und in der EP 2 239 237 A2 werden Verfahren beschrieben, mit denen die Oberflächenalkalinität mittels einer thermischen Behandlung der inneren Oberfläche des Glasbehälters reduziert werden kann.

Die US 2 199 332 A zeigt eine Maschine, mit welcher ein ringförmiger Bereich eines Glasbehälters von außerhalb des Glasbehälters thermisch behandelt werden kann, wobei die gesamte Glasbehälterwand durchwärmt wird.

Nicht nur Natriumborate, sondern allgemein Alkaliborate haben noch eine weitere nachteilige Eigenschaft. Die Verdampfungsrate der Alkaliborate steigt mit zunehmender Temperatur exponentiell an. Beim Bearbeiten des Bodens des Glasbehälters verdampft Natriumborat aus dem Bodenbereich und schlägt sich in einer Kondensationszone auf dem rohrförmigen Abschnitt des Glasbehälters nieder. In der Kondensationszone ist das Glas schon relativ kalt. Zwischen dem Glasbehälterboden und der Kondensationszone bildet sich aber auch eine Eindiffusionszone aus, in welcher mehr Natriumborat in das Glas hinein diffundiert als verdampft. Die Eindiffusionszone erstreckt sich über einen ringförmigen Bereich der inneren Oberfläche des rohrförmigen Abschnitts des Glasbehälters. In der Eindiffusionszone ergibt sich eine Anreicherung von Natriumborat bei einer Verarmung im Glasbehälterboden, wobei die Verarmung im Glasbehälterboden keine negativen Folgen hat. Die Anreicherung von Bor in Form von Borat in der Eindiffusionszone hat jedoch folgende Auswirkungen:
Im oberflächennahen Bereich der Eindiffusionszone (ca. 50 bis 500 nm) ausgehend von der inneren Oberfläche des Glasbehälters) bewirkt die Anreicherung von Bor bzw. Borat, dass sich das hauptsächlich aus Si, Na und B bestehende Borosilikatglas bei der Abkühlung entmischt, da man sich im Bereich einer Mischungslücke im ternären Phasendiagramm Si-Na-B befindet. Aufgrund der Mischungslücke entstehen zwei Phasen mit unterschiedlicher Zusammensetzung, die zwangsläufig auch unterschiedliche chemische und physikalische Eigenschaften haben. Eine der zwei Phasen weist auch eine geringere hydrolytische Beständigkeit auf, so dass sie verstärkt von den im Glasbehälter gelagerten Substanzen angegriffen wird. Die resultierende Oberflächenstruktur weist auch einen gegenüber dem unveränderten Borosilikatglas unterschiedlichen thermischen Ausdehnungskoeffizienten auf, wodurch Spannungen im oberflächennahen Bereich der Eindiffusionszone entstehen. Als Folge davon lösen sich partikelförmige Glasbestandteile von der Oberfläche ab, die eine deutlich geringere Erstreckung in einer Achse als in der Ebene senkrecht zu dieser Achse aufweisen. Diese Partikel gehen dann in die im Glasbehälter gelagerte Substanz über, was insbesondere dann besonders folgenreich ist, wenn die Substanz als Medizin verabreicht wird. Das Ablösen der partikelförmigen Glasbestandteile von der Oberfläche wird auch als Delamination bezeichnet.

Aufgabe der vorliegenden Erfindung ist es, ein Verfahren anzugeben, mit dem die Eindiffusionszone so behandelt werden kann, dass sie die oben beschriebenen Nachteile nicht mehr aufweist und insbesondere mit einer verbesserten Delaminationsbeständigkeit versehen kann. Zudem ist es Aufgabe der vorliegenden Erfindung, eine Glasbearbeitungsvorrichtung und eine Bodenmaschine vorzuschlagen, mit welcher das erfindungsgemäße Verfahren ausgeführt werden kann.

Gelöst wird die Aufgabe mit einem Verfahren nach Anspruch 1. Vorteilhafte Weiterbildungen des erfindungsgemäßen Verfahrens sind Gegenstand de auf Anspruch 1 rückbezogenen Unteransprüche.

Das erfindungsgemäße Verfahren umfasst folgende Schritte:
- Formen des Glasbehälterbodens aus dem Rohrglas,
- Ausblasen des Glasbehälters mit einem Gas,
- Erwärmen des sich dem Glasbehälterboden anschließenden ringförmigen Bereichs der inneren Oberfläche des rohrförmigen Abschnitts auf eine Behandlungstemperatur T_{Beh} oberhalb der Transformationstemperatur T_{G},
- Halten der Behandlungstemperatur T_{Beh} für eine bestimmte Zeitdauer,
- Abkühlen des Glasbehälters auf Raumtemperatur,
wobei der ringförmige Bereich auf eine Behandlungstemperatur T_{Beh} zwischen 700 und 1000°C erwärmt wird und dass der ringförmige Bereich von außerhalb des Glasbehälters mittels eines Gasbrenners oder eines Lasers thermisch behandelt wird, wobei die gesamte Glasbehälterwand im ringförmigen Bereich durchwärmt wird und der Schritt des Ausblasens zwischen dem Schritt des Formens des Glasbehälterbodens aus dem Rohrglas und dem Erwärmen des ringförmigen Bereichs durchgeführt wird.

Der Schritt des Formens des Glasbehälterbodens geschieht auf bekannte, zuvor erörterte Weise. Wenn der Glasbehälterboden fertig geformt ist, schließt sich der Schritt des Erwärmens des ringförmigen Bereichs der inneren Oberfläche des rohrförmigen Abschnitts an. Dieser Schritt muss sich dabei zeitlich nicht unmittelbar an den Schritt des Formens anschließen. Vielmehr kann der Glasbehälter auch für eine längere, grundsätzlich unbegrenzte Zeit gelagert werden, bevor er entsprechend auf die Behandlungstemperatur erwärmt wird, so dass die Schritte des Formens des Glasbehälterbodens und des Erwärmens des ringförmigen Bereichs sowohl zeitlich als auch räumlich entkoppelt durchführbar sind. Die einzige Voraussetzung ist, dass der Glasbehälterboden bereits fertig geformt ist, bevor der ringförmige Bereich erwärmt wird. Die Erwärmung auf die Behandlungstemperatur kann daher im Falle eines längere Zeit gelagerten Glasbehälters von der Raumtemperatur aus oder für den Fall, dass der Glasbehälter noch vom Bodenbildungsprozess warm ist, von der entsprechenden Temperatur aus erfolgen. Ist die Behandlungstemperatur erreicht, wird sie für eine bestimmte Zeitdauer gehalten. Die Eindiffusionszone befindet sich auf dem ringförmigen Bereich und kann sich ganz oder teilweise über ihn erstrecken, wobei sie umfänglich geschlossen ist.

Die Transformationstemperatur von relevanten Gläsern liegt in etwa zwischen 490°C und 600°C. Bei den zum Lagern von pharmazeutischen Produkten verwendeten Borosilikat-Rohrgläsern liegt die Transformationstemperatur zwischen 525°C und 565°C. Je nach verwendeten Gläsern kann somit die Behandlungstemperatur entsprechend gewählt werden.

Während der Zeit, für welche der ringförmige Bereich auf der Behandlungstemperatur gehalten wird, diffundiert das Bor, das sich im oberflächennahen Bereich der Eindiffusionszone angereichert hat, wieder aus dieser heraus. Der Borgehalt im oberflächennahen Bereich der Eindiffusionszone wird folglich an den Gehalt im restlichen Glasbehälter angeglichen. Als Konsequenz entsteht dort wieder ein stöchiometrisches Mischungsverhältnis, das eine phasentrennungsfreie Abkühlung erlaubt, da sich die dortige Zusammensetzung des Borosilikatglases im oberflächennahen Bereich der Eindiffusionszone nicht mehr im Bereich der Mischungslücke im zuvor näher erläuterten ternären Phasendiagramm Si-Na-B befindet. Die mit der verminderten Delaminationsbeständigkeit zusammenhängenden nachteiligen Effekte können somit deutlich vermindert oder sogar vollständig beseitigt werden.

Der Schritt des Abkühlens kann aktiv, also mit einer gesteuerten Abkühlung, einem vordefinierten Temperaturprofil folgend, oder passiv, beispielsweise durch Lagern der fertigen Glasbehälter bei Raumtemperatur, erfolgen. Bei den in der EP 2 546 206 A1 und der EP 2 239 237 A2 gezeigten thermischen Behandlungsverfahren wird die gesamte innere Oberfläche des Glasbehälters und nicht nur der ringförmige Bereich erwärmt, wobei der Glasbehälter nicht über die Transformationstemperatur T_{G} hinaus erwärmt wird.

Es hat sich als vorteilhaft herausgestellt, wenn der ringförmige Bereich auf eine Behandlungstemperatur T_{Beh} zwischen 700 und 1000°C erwärmt wird. In diesem Temperaturbereich ist sichergestellt, dass das Bor tatsächlich aus dem oberflächennahen Bereich der Eindiffusionszone heraus diffundieren kann. Bei einer über diesen Bereich liegenden Behandlungstemperatur kann zwar das Bor aus der Eindiffusionzone heraus diffundieren, allerdings besteht die Gefahr, dass sich in den angrenzenden Bereichen eine neue Eindiffusionzone bildet, so dass die durch die Boranreicherung verursachten Probleme nicht oder nur teilweise gelöst würden. Liegt die Behandlungstemperatur unter dem Bereich zwischen 700 und 1000°C, so ist nicht gewährleistet, dass das Bor überhaupt aus der Eindiffusionzone heraus diffundieren kann. Wenn ja, dann diffundiert es mit einer sehr geringen Diffusionsrate heraus, so dass der Glasbehälter für eine lange Zeit auf der Behandlungstemperatur gehalten werden muss, so dass das erfindungsgemäße Verfahren in die Länge gezogen werden würde, was aus fertigungstechnischer Sicht nicht erwünscht ist. Der beanspruchte Temperaturbereich stellt einen guten Kompromiss für die gebräuchlichen Borosilikat-Rohrgläser dar.

Erfindungsgemäß wird der ringförmige Bereich von außerhalb des Glasbehälters mittels eines Gasbrenners oder eines Lasers thermisch behandelt. Um den oberflächennahen Bereich auf der inneren Oberfläche des Glasbehälters auf die Behandlungstemperatur erwärmen zu können, muss die gesamte Glasbehälterwand im ringförmigen Bereich durchwärmt werden. Hierdurch wird der behandelte Bereich im Vergleich zu einer Behandlung von Innen deutlich größer, so dass ein lokales Fließen und hierdurch hervorgerufene plastische Verformungen nicht vermieden werden können, die aber innerhalb von bestimmten Grenzen nicht von nennenswertem Nachteil sind. Allerdings lässt sich eine derartige Behandlung von außerhalb des Glasbehälters deutlich einfacher umsetzen, da der Gasbrenner oder der Laser nicht in den Glasbehälter eingebracht werden muss. Folglich entfallen entsprechende Verstelleinrichtungen, was die Glasbearbeitungsvorrichtungen vereinfacht. Zudem ist die Sauerstoffversorgung des Gasbrenners in dieser Verfahrensvariante immer sichergestellt. Würde der Gasbrenner in den Glasbehälter eingebracht werden, ist dies nicht sichergestellt, so dass die Flamme in ihrer Temperatur verändert oder ganz erlöschen würde. Nur speziell auf diesen Anwendungsfall entwickelte Gasbrenner könnten zum Einsatz kommen, was wiederum mit Kostennachteilen verbunden ist. Da die thermische Behandlung von außerhalb des Glasbehälters vorgenommen wird, können handelsübliche Gasbrenner verwendet werden. Alternativ kann der ringförmige Bereich mit kurzwelligen Infrarotstrahlen thermisch behandelt werden.

Die thermische Behandlung soll dabei nicht nur die Erwärmung des ringförmigen Bereichs auf die Behandlungstemperatur beschränkt verstanden werden, sondern kann sich auch auf das Halten der Behandlungstemperatur für eine bestimmte Zeitdauer erstrecken. Der Laser stellt dabei einen Laserstrahl bereit, der beim Auftreffen auf den ringförmigen Bereich selbigen erwärmt. Beispielsweise kann ein CO₂-Laser zum Einsatz kommen, der einen Laserstrahl mit einer Wellenlänge von 9 bis 10,6 µm bereit stellt.

Erfindungsgemäß wird zwischen dem Schritt des Formens des Glasbehälterbodens aus dem Rohrglas und dem Schritt des Erwärmens des ringförmigen Bereichs der Glasbehälter mit einem Gas ausgeblasen. Dieser Schritt dient ebenfalls dazu, die dampfförmigen Borate, die sich nach der Bodenbildung im Innern des Glasbehälters ansammeln, aus dem Glasbehälter zu entfernen, damit diese bei der Erwärmung des ringförmigen Bereichs nicht in die oberflächennahen Bereiche der inneren Oberfläche hinein diffundieren und dort eine neue Eindiffusionszone bilden können.

In einer weiteren Ausführungsform des erfindungsgemäßen Verfahrens wird die Behandlungstemperatur für eine Zeitdauer zwischen 1 und 20 Sekunden gehalten. Die Zeitdauer wird auf die gewählte Behandlungstemperatur angepasst. Je höher die Behandlungstemperatur ist, desto kürzer kann die Zeitdauer sein. Eine Zeitdauer von 1 bis 20 Sekunden gewährleistet bei den angegebenen Behandlungstemperaturen, dass das Bor in dem Maße aus der Eindiffusionzone heraus diffundiert, dass die mit der Boranreicherung verbundenen Probleme auf ein unerhebliches Maß reduziert oder ganz beseitigt werden. Die Zeitdauer von 1 bis 20 Sekunden ist zudem aus fertigungstechnischer Sicht nicht zu lang, so dass der Fertigungsprozess der Glasbehälter im Vergleich zum herkömmlichen Herstellungsverfahren nicht wesentlich verlängert wird.

In einer vorteilhaften Ausbildung des erfindungsgemäßen Verfahrens wird der Glasbehälter vor dem Erwärmen des ringförmigen Bereichs auf die Behandlungstemperatur T_{Beh} auf eine Vorwärmtemperatur Tv von 400 bis 660°C und insbesondere auf eine Vorwärmtemperatur Tv vorgewärmt, bei welcher die Viskosität des Glasbehälters 10^{12,4} dPa sec oder weniger beträgt. Die Vorwärmung betrifft nicht nur den ringförmigen Bereich, sondern darüber hinaus zumindest die sich dem ringförmigen Bereich anschließenden Abschnitte des Glasbehälters, wobei aber auch der gesamte Glasbehälter vorgewärmt werden kann. Die Vorwärmung bewirkt, dass die Temperaturgradienten bei der Behandlung des ringförmigen Bereichs innerhalb des Glasbehälters im Vergleich zu nicht vorgewärmten Glasbehältern weniger steil sind. Folglich sind die thermischen Spannungen, die während der thermischen Behandlung des ringförmigen Bereichs im Glasbehälter induziert werden, deutlich geringer. Die thermischen Spannungen können während der thermischen Behandlung und beim oder nach dem Abkühlen zum Zerbrechen des Glasbehälters führen. Insbesondere bei der Verwendung eines Lasers treten hohe Temperaturgradienten auf, da, wie bereits beschrieben, lokal sehr begrenzte Bereiche des Glasbehälters erwärmt werden. Die insgesamt im Glasbehälter induzierten Spannungen werden durch die Vorwärmung auf den genannten Bereich spürbar verringert, ohne dass sich der Glasbehälter selbst verformen würde.

Der Glasbehälter kann in einem Entspannungsofen bei einer Entspannungstemperatur T_{E} entspannt werden, bei welcher die Viskosität des Glasbehälters 10^{13,3} dPa sec oder weniger beträgt. Auch für den Fall, dass der gesamte Glasbehälter vorgewärmt wird, kann nicht verhindert werden, dass bei der Erwärmung des ringförmigen Bereichs über die Transformationstemperatur T_{G} hinaus thermische Spannungen im Glasbehälter induziert werden, so dass es beim oder nach dem Abkühlen zu einer Rissbildung oder gar zu einer Zerstörung des Glasbehälters kommen kann. Die Entspannung im Entspannungsofen dient zum Abbau dieser thermischen Spannungen. Beträgt die Viskosität 10^{13,3} dPa sec, befindet sich das behandelte Glas am sogenannten oberen Entspannungspunkt, der in der DIN ISO 7884-7 näher beschrieben ist. Bei handelsüblichen Borosilikatgläsern wird diese Viskosität bei einer Temperatur zwischen 550 und 600°C erreicht. Da eine derartige Entspannung auch bei bekannten Verfahren zum Herstellen von Glasbehältern eingesetzt wird, stellt dieser Schritt gegenüber diesen Verfahren keinen zusätzlichen Aufwand dar.

In einer bevorzugten Weiterbildung des erfindungsgemäßen Verfahrens liegt zwischen dem Schritt des Formens des Glasbehälterbodens aus dem Rohrglas und dem Schritt des Erwärmens des ringförmigen Bereichs eine Zeitspanne von 20 bis 240 Sekunden und insbesondere von 30 bis 60 Sekunden. Wie bereits eingangs beschrieben, entsteht während des Formens des Glasbehälterbodens eine hohe Konzentration von dampf- oder gasförmigen Boraten im Glasbehälter, von der ein Teil in die oberflächennahen Bereiche des ringförmigen Bereichs hinein diffundiert. Wenn man den ringförmigen Bereich bereits dann thermisch behandelt, wenn die Konzentration von dampfförmigen Boraten hoch ist, besteht die Gefahr, dass eine neue Eindiffusionszone mit einer erhöhten Borkonzentration auf der inneren Oberfläche des Glasbehälters entsteht. Die dabei wesentlichen Vorgänge gleichen denen, die bei der Bodenbildung ablaufen. Wird der ringförmige Bereich erst mit einer zeitlichen Verzögerung nach dem Schritt des Formens des Glasbehälterbodens vorgenommen, so setzt sich ein Großteil der dampfförmigen Borate an der inneren Oberfläche ab. Das kondensierte Borat ist dann nicht mehr oder nur in vernachlässigendem Umfang in der Lage, bei der thermischen Behandlung des ringförmigen Bereichs in den oberflächennahen Bereich der inneren Oberfläche des Glasbehälters hinein zu diffundieren und eine neue Eindiffusionszone zu bilden. Das kondensierte Borat ist wasserlöslich und kann bei einem Reinigungsschritt mühelos entfernt werden.

Der ringförmige Bereich weist ein bodenzugewandtes Ende und ein bodenabgewandtes Ende auf, wobei das bodenzugewandte Ende einen Abstand LB zur Innenseite des Glasbehälterbodens entlang einer Behälterachse von vorzugsweise 0 bis 20 mm aufweist. Es hat sich herausgestellt, dass die Eindiffusionszone für nahezu alle gängigen Glasbehältervolumina einen entsprechenden Abstand zur Innenseite des Behälterbodens aufweist. Insofern ist es nicht notwendig, die gesamte innere Oberfläche des Glasbehälters zu behandeln, sondern ab dem angegebenen Abstand. Dabei beträgt der Abstand LA zwischen dem bodenzugewandten Ende und dem bodenabgewandten Ende zwischen 1 und 10 mm. Für nahezu alle gängigen Glasbehältervolumina weist die Eindiffusionszone eine derartige Erstreckung auf. Folglich können die Behandlungszeit und der Energiebedarf entsprechend begrenzt werden, so dass der Schritt des Erwärmens des sich dem Glasbehälterboden anschließenden ringförmigen Bereichs besonders effektiv durchgeführt werden kann.

Die Erfindung wird im Folgenden anhand von bevorzugten Ausführungsbeispielen unter Bezugnahme auf die anhängenden Zeichnungen im Detail erläutert. Es zeigen
- Figur 1: einen Glasbehälter, bei dem die während der Bearbeitung stattfindenden Verdampfungs-, Eindiffusions- und Abscheidevorgänge vereinfacht dargestellt sind,
- Figur 2: eine erste Ausführungsform einer Glasbearbeitungsvorrichtung anhand einer prinzipiellen Darstellung,
- Figur 3: eine zweite Ausführungsform einer Glasbearbeitungsvorrichtung, ebenfalls anhand einer prinzipiellen Darstellung,
- Figur 4: eine dritte Ausführungsform einer Glasbearbeitungsvorrichtung, ebenfalls anhand einer prinzipiellen Darstellung,
- Figur 5: einen Glasbehälter, dessen ringförmiger Bereich in einer Wärmbehandlungsstation von Innen mittels eines Lasers thermisch behandelt wird,
- Figur 6: einen Glasbehälter, dessen ringförmiger Bereich in einer Wärmebehandlungsstation von Außen mittels eines Gasbrenners thermisch behandelt wird, und
- Figur 7: einen Glasbehälter, der mit dem erfindungsgemäßen Verfahren hergestellt worden ist.

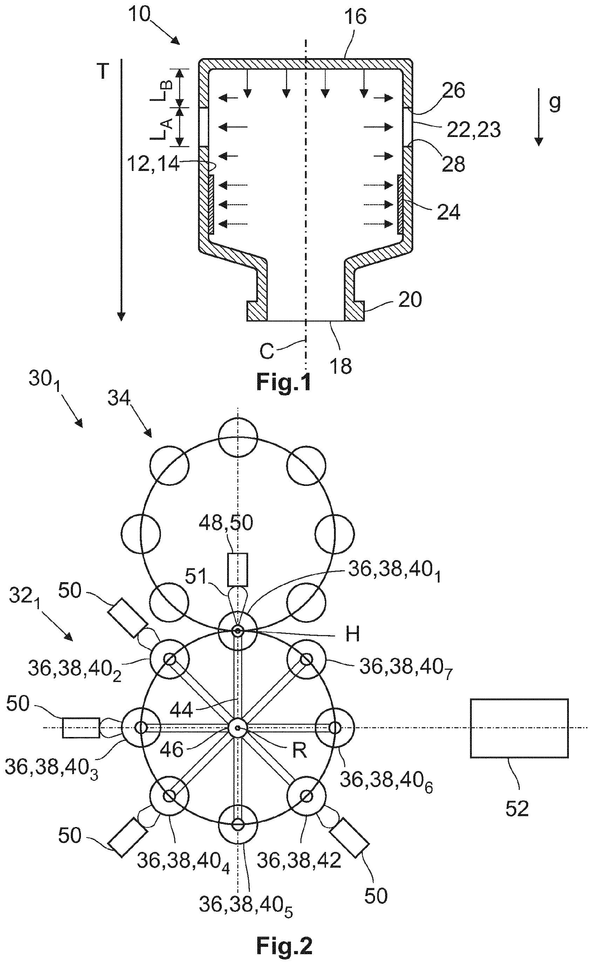

In Figur 1 ist ein Glasbehälter 10 dargestellt, mit dem die erfindungswesentlichen Vorgänge während des Herstellungsprozesses näher erläutert werden sollen. Der Glasbehälter 10 weist eine Behälterachse C auf und ist so dargestellt, wie er während und unmittelbar nach der Bodenbildung ausgerichtet ist. Wie eingangs erwähnt, wird der Glasbehälter 10 aus einem Rohrglas gefertigt. Folglich weist der Glasbehälter 10 einen rohrförmigen Abschnitt 12 mit einer inneren Oberfläche 14 auf. Zudem schließt sich ein Glasbehälterboden 16 nach oben an den rohrförmigen Abschnitt 12 an. Ferner weist der Glasbehälter 10 ein in der dargestellten Ausrichtung nach unten gerichtetes offenes Ende 18 mit einem Rollrand 20 auf, auf dem beispielsweise ein Verschluss aufgebracht werden kann.

Wie mehrfach erwähnt, wird der Glasbehälter 10 durch einen thermischen Trennprozess vom übrigen Rohrglas getrennt, weshalb der Glasbehälter 10 während des Trennprozesses am Glasbehälterboden 16 die höchste Temperatur aufweist. Die Temperatur T nimmt zum offenen Ende 18 ab, wie es durch den Pfeil angedeutet ist. Wie ebenfalls erwähnt, muss der Glasbehälterboden 16 nach dem Trennprozess weiteren thermischen Bearbeitungsvorgängen unterzogen werden, um ihn in die gewünschte Form zu bringen. Folglich wird der Glasbehälterboden 16 immer wieder erwärmt, so dass er über mehrere Bearbeitungsschritte hinweg die höchste Temperatur innerhalb des Glasbehälters 10 aufweist. Die Temperaturen liegen über den Verdampfungstemperaturen von einigen Bestandteilen des verwendeten Borosilikatglases, so dass insbesondere Natrium aus dem Bodenbereich verdampft, wobei Natrium zusätzlich noch Bor in Form von Boraten mitschleppt, so dass auch Bor aus dem Glas verdampft. Gleichzeitig diffundiert auch eine bestimmte Menge von Natrium und Bor wieder zurück in den Glasbehälterboden 16 und den rohrförmigen Abschnitt 12, wobei der Grad der Eindiffusion eine andere Temperaturabhängigkeit aufweist als der Grad der Verdampfung. Die Länge und die Richtung der Pfeile in der Figur 1 deuten dabei an, welcher der beiden Prozesse überwiegt. In Bodennähe überwiegt die Verdampfung, wohingegen mit sinkender Temperatur die Eindiffusion immer stärker wird und in einer Eindiffusionszone 22 ein Maximum erreicht. Sinkt die Temperatur des Glasbehälters 10 weiter ab, so wird aber auch der Eindiffusionsprozess immer schwächer, da es immer schwerer für Natrium und Bor wird, in die Glasmatrix einzudringen. Unterhalb einer bestimmten Temperatur können weder Natrium noch Bor in die Glasmatrix eindringen, so dass sie einen Niederschlag 24 auf der inneren Oberfläche 14 bilden.

Die Eindiffusionszone 22 befindet sich auf einem ringförmigen Bereich 23 auf der inneren Oberfläche 14 des rohrförmigen Abschnitts 12 des Glasbehälters 10. Der ringförmige Bereich 23 weist ein bodenzugewandtes Ende 26 und ein bodenabgewandtes Ende 28 auf. Das bodenzugewandte Ende 26 weist einen Abstand L_{B} zum Glasbehälterboden 16 auf, der in etwa zwischen 0 und 20 mm beträgt. Zudem weisen das bodenabgewandte Ende 28 und das bodenzugewandte Ende 26 einen Abstand L_{A} zueinander auf, der in etwa zwischen 1 und 10 mm beträgt. Der ringförmige Bereich 23 ist dabei nicht zwangsläufig deckungsgleich mit der Eindiffusionszone 22. Die Eindiffusionszone 22 befindet sich auf dem ringförmigen Bereich 23, muss sich aber nicht vollständig über ihn erstrecken.

In Figur 2 ist eine Glasbearbeitungsvorrichtung 30₁ mit einer Bodenmaschine 32₁ und einer Muttermaschine 34 gemäß einem ersten Ausführungsbeispiel dargestellt. Die Bodenmaschine 32₁ umfasst eine Anzahl von Halteeinheiten 36, die jeweils ein nicht näher dargestelltes Einspannfutter aufweisen, in welches ein ebenfalls nicht dargestelltes Rohrglas eingespannt werden kann. Die Halteeinheiten 36 bzw. die Einspannfutter sind einerseits um die eigene Achse H und andererseits um die Achse R drehbar. Im dargestellten Beispiel weist die Bodenmaschine 32 acht Halteeinheiten 36 auf, die in insgesamt acht Bearbeitungsstationen 38 gefahren werden können, die sich im dargestellten Beispiel in sieben primäre Bearbeitungsstationen 40₁ bis 40₇ und eine weitere Bearbeitungsposition 42 unterteilen. Ferner weist die Bodenmaschine 32 ein Kanalsystem 44 auf, mit welchem ein Gas, beispielsweise Luft, von einer Druckquelle 46 zu den Halteeinheiten 36 geführt werden kann.

Zur Herstellung eines hier nicht dargestellten Glasbehälters 10 wird ein nicht dargestelltes Rohrglas zunächst in ein Einspannfutter der Muttermaschine 34 eingespannt. Ein offenes Ende 18 des Rohrglases steht bezogen auf die Wirkrichtung der Schwerkraft um ein bestimmtes Maß nach unten über das Einspannfutter über und wird verschiedenen Bearbeitungsschritten unterzogen, um beispielsweise den Rollrand 20 (vgl. Figur 1) oder ein Gewinde zu formen. Ist das offene Ende fertig geformt, wird das Rohrglas in eine erste primäre Bearbeitungsstation 40₁ gefahren, in welcher das Einspannfutter der Muttermaschine 34 mit dem Einspannfutter der Bodenmaschine 32 axial fluchten. Die Einspannfutter der Muttermaschine 34 sind üblicherweise oberhalb der Einspannfutter der Bodenmaschine 32 angeordnet, woher die Bodenmaschine 32 auch ihre Bezeichnung bekommen hat. Im ursprünglichen Zustand hat das Rohrglas eine Länge von ca. 1,5 m, so dass der nach unten überstehende Teil des Rohrglases vom restlichen Teil zum Ausbilden des Glasbehälters 10 abgetrennt werden muss. Hierzu wird das Rohrglas an der entsprechenden Stelle mit einer Trenneinrichtung 48, die einen oder mehrere Gasbrenner 50₁ umfasst, erwärmt. Wenn die notwendige Temperatur erreicht ist, wird die Halteeinheit 36 mit dem Einspannfutter der Bodenmaschine 32 axial nach oben in Richtung des Einspannfutters der Muttermaschine 34 gefahren, so dass es das Rohrglas ergreifen kann. Anschließend wird das Einspannfutter wieder axial nach unten gefahren, wobei das Rohrglas an der Stelle, an der es erwärmt worden ist, unter Bildung von zwei geschlossenen Böden getrennt wird. Bereits in der ersten primären Bearbeitungsstation 40₁ wird ein Gasstrom über das Kanalsystem 44 in das Rohrglas eingeleitet.

Der sich nun im Einspannfutter der Bodenmaschine 32 befindende Glasbehälter 10 weist das bereits fertig geformte offene Ende 18 sowie den geschlossenen Glasbehälterboden 16 auf, wobei der Glasbehälterboden 16 aber noch nicht die gewünschte Form hat. Um den Glasbehälterboden 16 wunschgemäß zu formen, wird er mit weiteren Gasbrennern 50₂ bis 50₄ zielgerichtet behandelt, wozu die Bodenmaschine 32 in die weiteren primären Bearbeitungsstationen 40₂ bis 40₄ gefahren wird. Die Gasbrenner 50₂ bis 50₄ sind typischerweise auf den jeweiligen Bearbeitungsschritt angepasst. Während der Bearbeitung durch die Gasbrenner 50₂ bis 50₄ wird ebenfalls ein Gasstrom in den nun geschlossenen Glasbehälter 10 eingeleitet. Wenn der Glasbehälter 10 die primäre vierte Bearbeitungsstation 40₄ durchlaufen hat, ist der Glasbehälterboden 16 soweit fertig bearbeitet, dass der Glasbehälter 10 nun auf die gewünschte Länge gebracht werden kann. Hierzu wird der Glasbehälter 10 in der primären fünften Bearbeitungsstation 40₅ gegen eine nicht dargestellt Bodenmatrize gedrückt.

Anschließend wird der Glasbehälter 10 in die weitere Bearbeitungsstation 42 gefahren, in welcher der ringförmige Bereich 23 der inneren Oberfläche 14 des rohrförmigen Abschnitts 12 auf eine Behandlungstemperatur T_{Beh} erwärmt wird, die oberhalb der Transformationstemperatur liegt. Diese thermische Behandlung wird mit einem Gasbrenner 50_{X} durchgeführt, der den Glasbehälter 10 mittels einer von ihm bereitgestellten Flamme von Außen erwärmt und für die gewünschte Zeitdauer auf der Behandlungstemperatur T_{Beh} hält. Um den ringförmigen Bereich 23 gleichmäßig thermisch behandeln zu können, wird die Halteeinheit 36 mit dem Glasbehälter 10 um die Achse H gedreht. Die Bezeichnung 50_{X} soll verdeutlichen, dass der Gasbrenner 50_{X} in üblichen Glasbearbeitungsvorrichtungen nicht vorhanden ist und bestimmte Modifikationen aufweist, die auf die speziellen Erfordernisse der thermischen Behandlung des ringförmigen Bereichs 23 zugeschnitten sind. Eine thermische Behandlung mittels anderer Wärmequellen, beispielsweise mittels eines Lasers oder unter Verwendung von kurzwelligen Infrarotstrahlen ist ebenfalls denkbar.

Je nach Ausgestaltung des Verfahrens kann der Glasbehälter 10 vor der thermischen Behandlung des ringförmigen Bereichs 23 ausgeblasen werden, was mit demselben Gas geschehen kann, welches während des Formens des Glasbehälterbodens 16 in den Glasbehälter 10 eingeleitet wird.

Nach der thermischen Behandlung wird der Glasbehälter 10 in die sechste primäre Bearbeitungsstation 40₆ gefahren und aus dem Einspannfutter entnommen. In der siebten primären Bearbeitungsposition 40₇ wird üblicherweise keine Bearbeitung vorgenommen. Von der sechsten primären Bearbeitungsstation 40₆ wird der Glasbehälter 10 dann in einen Entspannungsofen 52 transportiert, in welchem der Glasbehälter 10 durch Erwärmen auf eine Entspannungstemperatur entspannt wird. Nach Abschluss der Entspannung wird der Glasbehälter 10 aus dem Entspannungsofen 52 entnommen und abgekühlt, was passiv durch Lagerung bei Raumtemperatur oder durch ein gezieltes aktives Kühlen in einer nicht dargestellten Kühleinheit geschehen kann. Der abgekühlte Glasbehälter 10 kann nun verwendet werden.

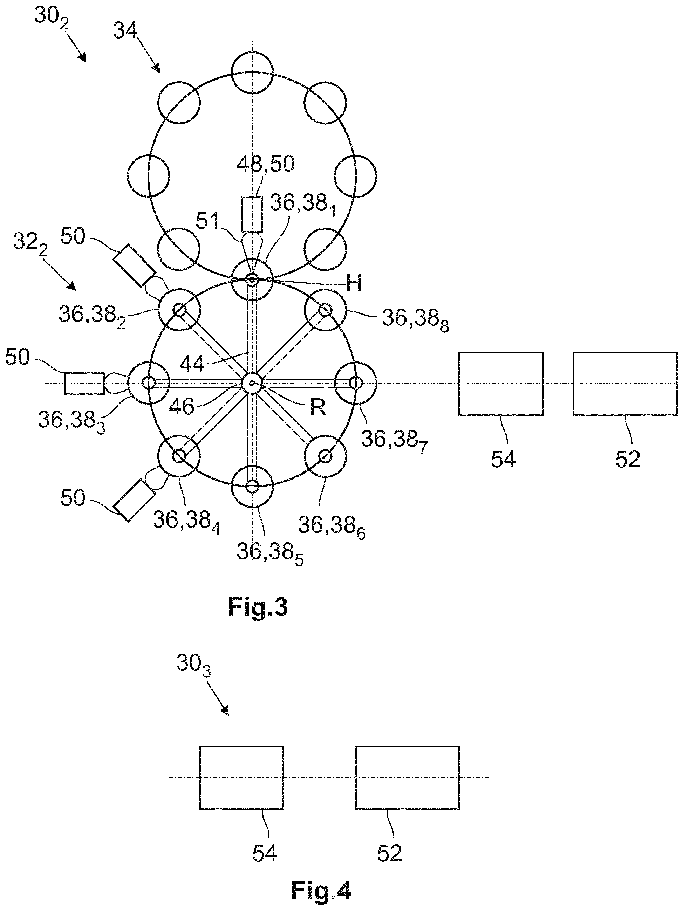

In Figur 3 ist ein zweites Ausführungsbeispiel der Glasbearbeitungsvorrichtung 30₂ dargestellt, die wiederum eine Bodenmaschine 32₂ und eine Muttermaschine 34 aufweist. Im Gegensatz zu dem ersten Ausführungsbeispiel weist die Glasbearbeitungsvorrichtung 30₂ nach dem zweiten Beispiel eine handelsübliche Bodenmaschine 32₂ mit insgesamt acht Bearbeitungsstationen 38₁ bis 38₈ auf. Eine Unterscheidung zwischen primären und weiteren Bearbeitungsstationen kann hier nicht vorgenommen werden, da die thermische Behandlung des ringförmigen Bereichs 23 nicht an der Bodenmaschine 32₂, sondern in einer separaten Wärmebehandlungsstation 54 vorgenommen wird. Anstelle der weiteren Bearbeitungsstation 40 der Bodenmaschine 32₂ tritt im zweiten Ausführungsbeispiel eine Bearbeitungsstation 38₆, an welcher der Glasbehälter 10 abgekühlt werden kann.

Der Glasbehälter 10 wird an der siebten Bearbeitungsstation 38₇ von der Bodenmaschine 32 entnommen und der Wärmebehandlungsstation 54 zugeführt, die in Bearbeitungsrichtung des Glasbehälters 10 zwischen der Bodenmaschine 32 und dem Entspannungsofen 52 angeordnet ist. In der Wärmebehandlungsstation 54 wird der ringförmige Bereich 23 des Glasbehälters 10 wie oben beschrieben thermisch behandelt, danach im Entspannungsofen 52 entspannt und anschließend abgekühlt.

In Figur 4 ist eine dritte Ausführungsform der Glasbearbeitungsstation 30₃ dargestellt, die nur die Wärmebehandlungsstation 54 und den Entspannungsofen 52 umfasst. Die Wärmebearbeitungsstation 54 und der Entspannungsofen 52 sind räumlich getrennt von der Bodenmaschine 32 und der Muttermaschine 34 angeordnet. Diese Ausführungsform eignet sich für Glasbehälter 10, die auf herkömmliche Weise hergestellt worden sind und nun erfindungsgemäß nachbearbeitet werden. In diesem Fall liegt zwischen dem Formen des Glasbehälterbodens 16 und dem thermischen Behandeln des ringförmigen Bereichs 23 eine große Zeitspanne. Bei entsprechender Verfahrensführung kann die Entspannung des Glasbehälters 10 nach der thermischen Behandlung des ringförmigen Bereichs 23 entfallen.

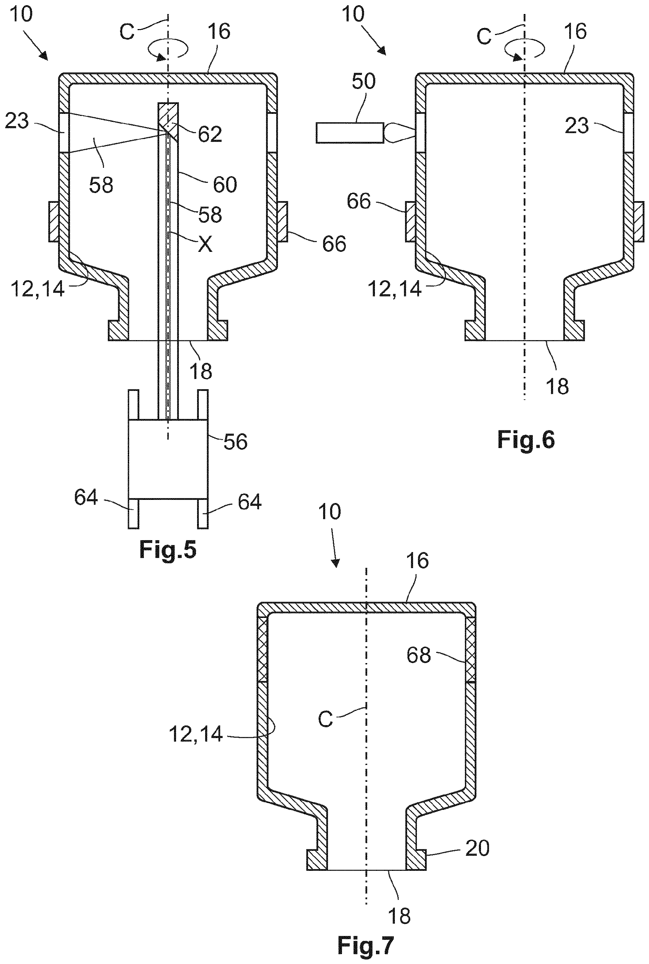

In den Figuren 5 und 6 sind zwei verschiedene Arten dargestellt, wie der ringförmige Bereich 23 in der Wärmebehandlungsstation 54 thermisch behandelt werden kann. In Figur 5 umfasst die Wärmebehandlungsstation 54 einen Laser 56, der einen Laserstrahl 58 bereitstellt. Unter Laser 56 soll in diesem Zusammenhang die Vorrichtung verstanden werden, mit welcher der Laserstrahl 58 erzeugt wird. Der Laser 56 weist einen im Wesentlichen rohrförmigen Führungsabschnitt 60 auf, mit welchem der Laserstrahl 58 geführt und vor äußeren Einflüssen geschützt wird. Gleichzeitig dient der Führungsabschnitt 60 auch zum Schutz von Personen, die sich in unmittelbarer Nähe des Lasers 56 bzw. des Laserstrahls 58 aufhalten. Am distalen Ende des Führungsabschnitts 60 ist eine Umlenkeinrichtung 62 angeordnet, welche dafür sorgt, dass der Laserstrahl 58 um ca. 90° umgelenkt wird und radial aus dem Führungsabschnitt 60 austritt. Der Führungsabschnitt 60 kann dort, wo der Laserstrahl 58 austritt, eine Öffnung oder ein Fenster haben und ansonsten geschlossen sein. Die Umlenkeinrichtung 62 ist zudem so ausgestaltet, dass sie eine Aufweitung des Laserstrahls 58 bewirkt. Wenn man von einem annäherungsweise kreisförmigen Querschnitt des Laserstrahls 58 beim Verlassen des Lasers 56 ausgeht, wird der Laserstrahl 58 beim Auftreffen auf die Umlenkeinrichtung 62 so verändert, dass er annäherungsweise einen elliptischen, ovalen oder rechteckigen Querschnitt aufweist.

Zudem weist der Laser 56 eine Verstelleinrichtung 64 auf, mit welcher der Laser 56 zumindest entlang der Achse X des Laserstrahls 58 bei Verlassen des Lasers 56 vor- und zurück bewegt werden kann.

In der Wärmebehandlungsstation 54 wird der Glasbehälter 10 mittels einer Trageinrichtung 66 gehalten und transportiert. Die Trageinrichtung 66 kann so ausgestaltet sein, dass der Glasbehälter 10 eine zwei- oder dreidimensionale Bewegung ausführen kann.

Die Trageinrichtung 66 fährt den Glasbehälter 10 in eine Position, in der die Behälterachse C und die Achse X des Laserstrahls 58 bei Verlassen des Lasers 56 in etwa aufeinander liegen. Je nach Ausgestaltung der Verstelleinrichtung und der Trageinrichtung 66 wird der Glasbehälter 10 so auf den Laser 56 zu bewegt, dass der Führungsabschnitt 60 durch das offene Ende 18 in den Glasbehälter 10 so weit eingebracht wird, bis dass der umgelenkte Laserstrahl 58 auf die innere Oberfläche 14 trifft und den ringförmigen Bereich 23 vom Innern des Glasbehälters 10 überstreichen kann. Alternativ kann der Laser 56 auf den Glasbehälter 10 oder beide aufeinander zu bewegt werden. Ebenfalls ist es denkbar, den Führungsabschnitt 62 beispielsweise teleskopartig auszugestalten, so dass nur der Führungsabschnitt 62 bewegt wird. Anschließend wird entweder der Glasbehälter 10 mittels der Trageinrichtung 66 oder der Laser 56 oder der Führungsabschnitt 60 mittels der Verstelleinrichtung gedreht, so dass der ringförmige Bereich 23 vollständig vom Laserstrahl 58 überstrichen und folglich erwärmt wird. Der Glasbehälter 10 muss daher um mindestens 360° relativ zum Laser 56 bzw. zum Laserstrahl 58 gedreht werden, wobei auch eine Drehung um ein ganzzahliges Vielfaches von 360° denkbar ist, um den ringförmigen Bereich 23 für die gesamte notwendige Zeitdauer auf der Behandlungstemperatur T_{Beh} zu halten.

Nach erfolgter thermischer Behandlung wird der Glasbehälter 10 vom Laser 56 weg bewegt, so dass der Führungsabschnitt 60 nicht mehr über das offene Ende in den Glasbehälter 10 hineinragt. Der Glasbehälter 10 kann nun mit der Trageinrichtung 66 weiter zum Entspannungsofen 52 transportiert und auf die bereits erläuterte Weise weiter behandelt werden.

In Figur 6 ist eine zweite Weise dargestellt, wie der ringförmige Bereich 23 des Glasbehälters 10 in der Wärmebehandlungsstation 54 thermisch behandelt werden kann. In diesem Fall weist die Wärmebehandlungsstation 54 einen Gasbrenner 50 auf, der stationär in der Wärmebehandlungsstation 54 angeordnet ist. Der Glasbehälter 10 wird mit der Trageinrichtung 66 so relativ zum Gasbrenner 50 positioniert, dass der ringförmige Bereich 23 von außen her mittels des Gasbrenners 50 thermisch behandelt werden kann. Da der Gasbrenner 50 nur mit großem mechanischen Aufwand um den Glasbehälter 10 herum gedreht werden kann, wird in diesem Fall der Glasbehälter 10 mittels der Trageinrichtung 66 um die eigene Behälterachse C gedreht, so dass der ringförmige Bereich 23 gleichmäßig auf die Behandlungstemperatur T_{Beh} erwärmt wird.

Nach erfolgter thermischer Behandlung des ringförmigen Bereichs 23 kann der Glasbehälter 10 nun mit der Trageinrichtung 66 weiter zum Entspannungsofen 52 transportiert und auf die bereits erläuterte Weise weiter behandelt werden.

Anstelle des Gasbrenners 50 kann der ringförmige Abschnitt auf dieselbe Weise von außen mittels eines Lasers 56 behandelt werden.

In Figur 7 ist ein Glasbehälter 10 dargestellt, der mit dem erfindungsgemäßen Verfahren behandelt worden ist. Der Glasbehälter 10 weist auf dem rohrförmigen Abschnitt 12 eine plastische Verformung 68 auf. Die plastische Verformung 68 ist Folge der thermischen Behandlung des ringförmigen Bereichs 23 von außerhalb des Glasbehälters 10. Bei der Behandlung von Außen muss die gesamte Wandung so erwärmt werden, dass auf der inneren Oberfläche 14 die Behandlungstemperatur T_{Beh} erreicht wird. Aufgrund der dabei erreichten niedrigen Viskositäten der gesamten Wandung kann ein lokales Fließen des Glasbehälters 10 nicht verhindert werden. Dieser Effekt kann verstärkt dann auftreten, wenn ein Gasbrenner zur thermischen Behandlung verwendet wird, da das ausströmende Gas einen Staudruck auf die äußere Oberfläche des Glasbehälters 10 ausübt und so das lokale Fließen begünstigt. Die plastische Verformung 68 ist typischerweise im ringförmigen Bereich 23 oder zwischen dem ringförmigen Bereich 23 und dem Glasbehälterboden 16 angeordnet (vgl. Figur 1). Die plastische Verformung 68 kann in entsprechenden Qualitätskontrollen als Nachweis dafür herangezogen werden, ob ein Glasbehälter 10 erfindungsgemäß thermisch behandelt worden ist oder nicht.

### Bezugszeichenliste

- 10: Glasbehälter
- 12: rohrförmiger Abschnitt
- 14: innere Oberfläche
- 16: Glasbehälterboden
- 18: offenes Ende

- 20: Rollrand
- 22: Eindiffusionzone
- 23: ringförmiger Bereich
- 24: Niederschlag
- 26: bodenzugewandtes Ende
- 28: bodenabgewandtes Ende

- 30, 30₁ - 30₃: Glasbearbeitungsvorrichtung
- 32, 32₁, 32₂: Bodenmaschine
- 34: Muttermaschine
- 36: Halteeinheit
- 38, 38₁ - 38₈: Bearbeitungsstation

- 40, 40₁ - 40₇: primäre Bearbeitungsstation
- 42: weitere Bearbeitungsstation
- 44: Kanalsystem
- 46: Druckquelle
- 48: Trenneinrichtung

- 50, 50₁ - 50_{X}: Gasbrenner
- 51: Flamme
- 52: Entspannungsofen
- 54: Wärmebehandlungsstation
- 56: Laser
- 58: Laserstrahl
- 60: Führungsabschnitt

- 62: Umlenkeinrichtung
- 64: Verstelleinrichtung
- 66: Trageinrichtung
- 68: plastische Verformung

- C: Behälterachse
- H: Achse Halteeinheit
- L_{A}: Abstand
- L_{B}: Abstand
- R: Achse Bodenmaschine
- T_{Beh}: Behandlungstemperatur
- T_{E}: Entspannungstemperatur
- T_{G}: Transformationstemperatur
- X: Achse

## Patentansprüche

1. Verfahren zum thermischen Behandeln eines ringförmigen Bereichs (23) einer inneren Oberfläche (14) eines aus einem Borosilikat-Rohrglas hergestellten Glasbehälters (10), wobei sich der ringförmige Bereich (23) auf einem rohrförmigen Abschnitt (12) des Glasbehälters (10) befindet und sich einem Glasbehälterboden (16) anschließt, umfassend folgende Schritte:
- Formen des Glasbehälterbodens (16) aus dem Rohrglas,
- Ausblasen des Glasbehälters (10) mit einem Gas,
- Erwärmen des sich dem Glasbehälterboden (16) anschließenden ringförmigen Bereichs (23) der inneren Oberfläche (14) des rohrförmigen Abschnitts (12) auf eine Behandlungstemperatur T_{Beh} oberhalb der Transformationstemperatur T_{G},
- Halten der Behandlungstemperatur T_{Beh} für eine bestimmte Zeitdauer,
- Abkühlen des Glasbehälters (10) auf Raumtemperatur
**dadurch gekennzeichnet, dass** der ringförmige Bereich (23) auf eine Behandlungstemperatur T_{Beh} zwischen 700 und 1000°C erwärmt wird und dass der ringförmige Bereich (23) von außerhalb des Glasbehälters (10) mittels eines Gasbrenners (50) oder eines Lasers (56) thermisch behandelt wird, wobei die gesamte Glasbehälterwand im ringförmigen Bereich (23) durchwärmt wird und der Schritt des Ausblasens zwischen dem Schritt des Formens des Glasbehälterbodens (16) aus dem Rohrglas und dem Erwärmen des ringförmigen Bereichs (23) durchgeführt wird.

2. Verfahren nach Anspruch 1,
**dadurch gekennzeichnet, dass** die Behandlungstemperatur T_{Beh} für eine Zeitdauer zwischen 1 und 20 Sekunden gehalten wird.

3. Verfahren nach einem der vorherigen Ansprüche,
**dadurch gekennzeichnet, dass** der Glasbehälter (10) vor dem Erwärmen des ringförmigen Abschnitts auf die Behandlungstemperatur T_{Beh} auf eine Vorwärmtemperatur T_{V} von 400 bis 660°C und insbesondere auf eine Vorwärmtemperatur T_{V} vorgewärmt wird, bei welcher die Viskosität des Glasbehälters (10) 10^{12,4} dPa sec oder weniger beträgt.

4. Verfahren nach einem der vorherigen Ansprüche,
**dadurch gekennzeichnet, dass** zwischen dem Schritt des Formens des Glasbehälterbodens (16) aus dem Rohrglas und dem Schritt des Erwärmens des ringförmigen Bereichs (23) eine Zeitspanne von 20 bis 240 Sekunden und insbesondere von 30 bis 60 Sekunden liegt.

5. Verfahren nach einem der vorherigen Ansprüche,
**dadurch gekennzeichnet, dass** der ringförmige Bereich (23) zwischen einem bodenzugewandten Ende (26) und einem bodenabgewandten Ende (28) thermisch behandelt wird, wobei das bodenzugewandte Ende (26) einen Abstand (L_{B}) zur Innenseite des Glasbehälterbodens (16) entlang einer Behälterachse (C) von 0 bis 20 mm aufweist.

6. Verfahren nach Anspruch 5,
**dadurch gekennzeichnet, dass** der ringförmige Bereich (23) thermisch behandelt wird, dessen Abstand (L_{A}) zwischen dem bodenzugewandten Ende (26) und dem bodenabgewandten Ende (28) zwischen 1 und 10 mm beträgt.

## Claims

1. A method for thermally treating an annular region (23) of an inner surface (14) of a glass container (10) made of a borosilicate tubular glass, said annular region (23) being located on a tubular portion (12) of said glass container (10) and adjoining a glass container bottom (16), comprising the steps of:
- Forming the glass container bottom (16) from the tubular glass,
- Blow out the glass container (10) with a gas,
- heating the annular region (23) of the inner surface (14) of the tubular section (12) adjoining the glass container base (16) to a treatment temperature T_{Beh} above the transformation temperature T_{G},
- Maintaining the treatment temperature T_{Beh} for a certain period of time,
- Cool down the glass container (10) to room temperature.
**characterized in that** the annular region (23) is heated to a treatment temperature T_{Beh} between 700 and 1000°C and that the annular region (23) is thermally treated from outside the glass container (10) by means of a gas burner (50) or a laser (56), wherein the entire glass container wall in the annular region (23) is heated through and the step of blowing out is performed between the step of forming the glass container bottom (16) from the tubular glass and the heating of the annular region (23).

2. Method according to claim 1,
**characterized in that** the treatment temperature T_{Beh} is maintained for a period between 1 and 20 seconds.

3. Method according to one of the previous claims,
**characterized in that** the glass container (10) is preheated to a preheating temperature T_{V} of 400 to 660°C and in particular to a preheating temperature T_{V}, at which the viscosity of the glass container (10) is 10^{12.4} dPa sec or less, before heating the annular portion to the treatment temperature _{TBeh}.

4. Method according to one of the previous claims,
**characterized in that** between the step of forming the glass container bottom (16) from the tubular glass and the step of heating the annular region (23) there is a time period of 20 to 240 seconds and in particular 30 to 60 seconds.

5. Method according to one of the previous claims,
**characterized in that** the annular region (23) between a bottom facing end (26) and a bottom averted end (28) is thermally treated, the bottom facing end (26) having a distance (L_{B}) from the inside of the glass container bottom (16) along a container axis (C) of 0 to 20 mm.

6. Method according to claim 5,
**characterized in that** the annular region (23) is thermally treated, the distance (L_{A}) between the end (26) facing the ground and the averted end (28) facing away from the ground being between 1 and 10 mm.

## Revendications

1. Procédé de traitement thermique d'une région annulaire (23) d'une surface intérieure (14) d'un récipient en verre (10) constitué d'un verre tubulaire borosilicaté, ladite région annulaire (23) étant située sur une partie tubulaire (12) dudit récipient en verre (10) et adjacente à un fond (16) de récipient en verre, comprenant les étapes suivantes:
- Formage du fond du récipient en verre (16) à partir du verre tubulaire,
- Souffler le récipient en verre (10) avec un gaz,
- le chauffage de la zone annulaire (23) de la surface intérieure (14) de la section tubulaire (12) adjacente à la base (16) du récipient en verre à une température de traitement T_{Beh} supérieure à la température de transformation TG,
- Maintien de la température de traitement T_{Beh} pendant un certain temps,
- Refroidir le récipient en verre (10) à température ambiante.
**caractérisé en ce que** la région annulaire (23) est chauffée à une température de traitement T_{Beh} comprise entre 700 et 1000°C et **en ce que** la région annulaire (23) est traitée thermiquement de l'extérieur du récipient en verre (10) au moyen d'un brûleur à gaz (50) ou d'un laser (56), dans lequel la paroi entière du récipient en verre dans la région annulaire (23) est chauffée et l'étape de soufflage est effectuée entre l'étape de formation du fond (16) du récipient en verre du verre tubulaire et le chauffage de la région annulaire (23).

2. Procédé selon la revendication 1,
**caractérisé en ce que** la température de traitement T_{Beh} est maintenue pendant une période comprise entre 1 et 20 secondes.

3. Procédé selon l'une des revendications précédentes,
**caractérisé en ce que** le récipient en verre (10) est préchauffé à une température de préchauffage T_{V} de 400 à 660°C et en particulier à une température de préchauffage T_{V}, à laquelle la viscosité du récipient en verre (10) est de 10^{12,4} dPa sec ou moins, avant chauffage de la partie annulaire à la température de traitement T_{Beh}.

4. Procédé selon l'une des revendications précédentes,
**caractérisé en ce qu'**entre l'étape de formation du fond (16) du récipient en verre à partir du verre tubulaire et l'étape de chauffage de la région annulaire (23), il y a une durée de 20 à 240 secondes et en particulier de 30 à 60 secondes.

5. Procédé selon l'une des revendications précédentes,
**caractérisé en ce que** la région annulaire (23) entre une extrémité tournée vers le fond (26) et une extrémité tourné le dos au fond (28) est traitée thermiquement, l'extrémité face au fond (26) ayant une distance (L_{B}) de l'intérieur du fond (16) du récipient en verre le long d'un axe du récipient (C) de 0 à 20 mm.

6. Procédé selon la revendication 5,
**caractérisé en ce que** la région annulaire (23) est traitée thermiquement, la distance (L_{A}) entre l'extrémité (26) tournée vers le sol et l'extrémité (28) tournée vers l'extérieur du sol étant entre 1 et 10 mm.
